# FASCICULE DE BREVET EUROPEEN

(11) **EP 2 776 592 B1**
(45) Date de publication et mention de la délivrance du brevet: **04.03.2015**
(21) Numéro de dépôt: 12780762.6
(22) Date de dépôt: 06.11.2012
(51) Int. Cl.: C21B 7/16, F27B 1/16

(54) **SYSTEME DE LIAISON ETANCHE ENTRE UNE TUYERE ET UN BUSILLON D'AMENEE DE VENT CHAUD POUR UN FOUR A CUVE, ET HAUT FOURNEAU SIDERURGIQUE COMPORTANT UN TEL SYSTEME**
SYSTEM ZUR DICHTEN VERBINDUNG ZWISCHEN EINER BLASFORM UND EINER HEISSWINDEINLASSDÜSE FÜR EINEN SCHACHTOFEN UND HOCHOFEN FÜR DIE STAHLERZEUGUNG MIT EINEM SOLCHEN SYSTEM
SYSTEM OF LEAKTIGHT CONNECTION BETWEEN A TUYERE AND A HOT BLAST INLET NOZZLE FOR A SHAFT FURNACE, AND STEEL-MAKING BLAST FURNACE COMPRISING SUCH A SYSTEM

(30) Priorité: 09.11.2011 LU 91897
(43) Date de publication de la demande: 17.09.2014
(73) Titulaire: Paul Wurth S.A., 1122 Luxembourg (LU)
(72) Inventeur: TOCKERT, Paul, L-6830 Berbourg (LU); LONARDI, Emile, L-4945 Bascharage (LU); JUNG, Benoît, F-57100 Thionville (FR)
(74) Mandataire: Office Freylinger
(86) Numéro de dépôt international: PCT/EP2012/071901
(87) Numéro de publication internationale: WO 2013/068333

(56) Documents cités:
- EP-A1- 0 618 301
- DE-C- 103 059
- US-A- 3 545 736

## Description

### Domaine technique

La présente invention concerne un système de liaison étanche entre une tuyère et un busillon d'amenée de vent chaud pour un four à cuve, tel qu'un haut-fourneau sidérurgique. Elle concerne aussi un haut-fourneau sidérurgique comportant un tel système.

### Etat de la technique

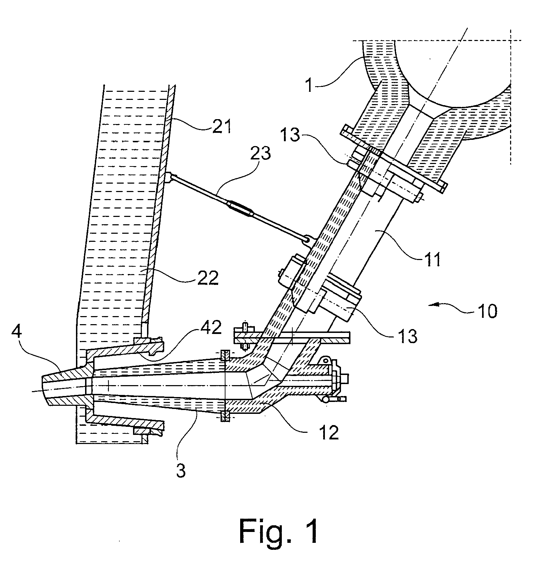

L'injection d'air préchauffé dans un four à cuve est classiquement réalisée au moyen d'un ensemble, appelé porte-vent, qui assure la liaison entre la circulaire à vent chaud et une tuyère, implantée dans la paroi du four, qui débouche dans la cuve du four. Typiquement, comme représenté en figure 1, le porte-vent 10 est composé de plusieurs éléments distincts comprenant chacun un blindage extérieur métallique et un revêtement réfractaire intérieur.

Le porte-vent 10 comporte
- une descente 11 s'étendant obliquement vers le bas à partir d'une circulaire à vent chaud 1,
- un coude 12
- un busillon 3, d'axe sensiblement horizontal, fixé rigidement sur le coude, l'extrémité avant du busillon étant maintenue en contact avec l'extrémité arrière de la tuyère 4.

La tuyère 4 en cuivre, refroidie par une circulation interne d'eau, est montée dans un porte-tuyère, ou tympe, 42 fixé sur la paroi métallique 21 du haut-fourneau et s'étendant à travers le garnissage réfractaire interne 22 de cette paroi.

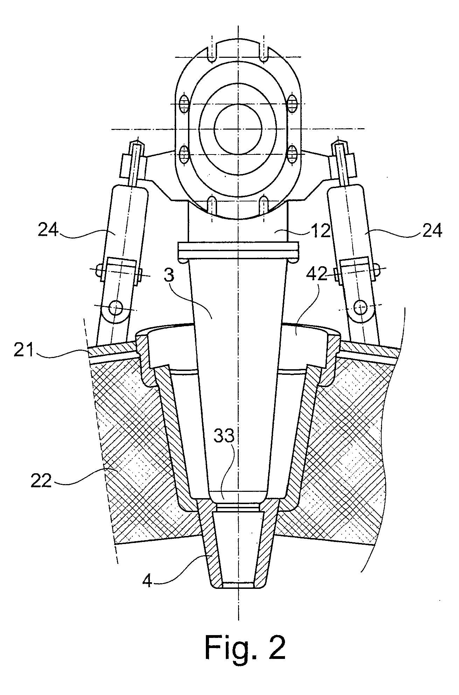

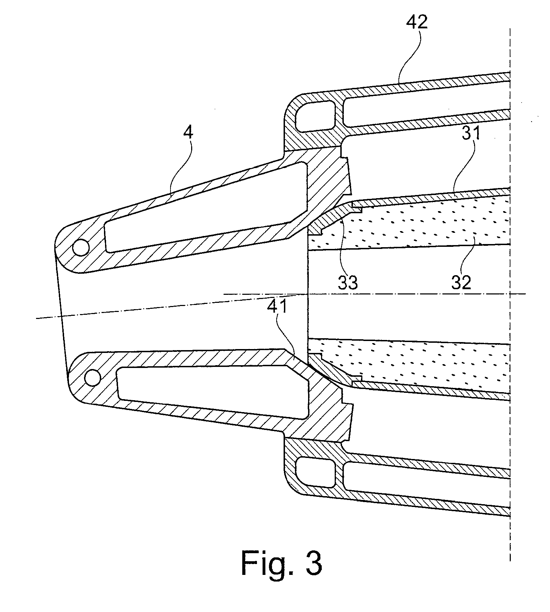

Le busillon 3 comporte une paroi extérieure 31 en acier, revêtue intérieurement d'un matériau réfractaire 32. Comme représenté aux figures 2 et 3, la paroi extérieure se prolonge vers l'extrémité avant, ou nez, 33 du busillon pour constituer une paroi de forme sphérique, en appui rotulant contre une paroi tronconique 41 formée à l'extrémité arrière de la tuyère 4.

Le porte-vent est supporté sur la paroi métallique externe 21 du four par des tirants articulés, tels que le tirant supérieur 23 et des tirants latéraux 24, ces derniers assurant l'appui du busillon contre la tuyère. Ces tirants laissent à l'ensemble du porte-vent une certaine liberté de déplacement, pour absorber les déformations thermiques, tant de la paroi du four que des différents éléments du porte-vent, résultant inévitablement des variations de températures.

Pour assurer l'étanchéité entre les différents éléments malgré les déformations pré-mentionnées, il est connu d'utiliser des systèmes de compensateurs à soufflets 13 qui permettent d'absorber des mouvements relatifs au niveau de la liaison entre deux éléments, en déplacement axial ou en pivotement, tout en conservant l'étanchéité, des tirants assurant la liaison mécanique entre les éléments raccordés par les compensateurs à soufflet. De tels systèmes à compensateurs sont décrits par exemple dans EP 0 453 739, et US 3 545 736 et sont typiquement utilisés pour assurer l'étanchéité entre la circulaire et le porte-vent et peuvent aussi être utilisés entre la descente de vent et le coude sur lequel le busillon est fixé.

De tels systèmes à compensateurs sont d'autant plus utiles, pour donner au porte-vent une certaine capacité de déformation, qu'il est par ailleurs nécessaire d'assurer une jonction la plus étanche possible entre le nez du busillon et la tuyère, là ou de tels systèmes ne peuvent être utilisés compte tenu notamment de la configuration de l'environnement de cette jonction, située dans l'épaisseur de la paroi réfractaire du four. Cette jonction est donc réalisée par simple appui centré du nez du busillon contre l'extrémité arrière de la tuyère, cet appui étant obtenu par les seules forces résultantes du poids du porte-vent et de la traction exercée par les tirants articulés 24 reliant le porte-vent à la paroi extérieure métallique du four. Pour permettre les déformations thermiques, pouvant entraîner un décalage angulaire entre le busillon et la tuyère, le nez de busillon présente une surface sphérique convexe, en contact avec une surface tronconique ou convexe correspondante formée à l'extrémité arrière de la tuyère. La surface sphérique du nez du busillon est formée par l'extrémité de la paroi externe en acier du busillon. La tuyère est classiquement réalisée en cuivre.

Cette disposition, formant une liaison à rotule entre busillon et tuyère, permet d'assurer le centrage du busillon sur la tuyère par simple appui, et le contact métal sur métal entre l'acier du busillon et le cuivre de la tuyère permet de conserver entre ceux-ci, lors de leurs déplacements relatifs angulaires, un contact sensiblement linéaire, et donc une certaine étanchéité entre busillon et tuyère.

On connaît aussi par US 3545736 un système dans lequel un espace annulaire est ménagé entre une enveloppe tubulaire métallique et la partie réfractaire du busillon. L'enveloppe comporte une première extrémité placée contre la tuyère et pouvant pivoter contre celle-ci, et est appuyée contre la tuyère par le coude du porte vent qui vient lui même en appui étanche contre la deuxième extrémité de l'enveloppe. Le but de cet agencement est de limiter l'écart de températures entre l'extérieur et l'intérieur de la partie réfractaire du busillon en permettant aux gaz chaud d'arriver dans l'espace annulaire, via un espacement axial maintenu entre le coude du porte vent et le busillon. Dans ce système aussi, une certaine étanchéité peut être obtenue entre la première extrémité de l'enveloppe et la tuyère lors de leurs déplacements relatifs angulaires.

Mais, tout comme lorsque le busillon réfractaire est pressé directement contre la tuyère, cette étanchéité ne peut cependant pas être assurée de manière parfaite. En conséquence, on accepte actuellement des fuites limitées de vent, dans la mesure où ce vent chaud est seulement de l'air enrichi en oxygène. Mais dans la mise en oeuvre de techniques plus récentes de recirculation de gaz de gueulard, ce gaz est réinjecté avec le vent chaud. Or ce gaz de gueulard est très dangereux et en conséquence de telles fuites, même minimes ne peuvent être autorisées. Même dans les hauts-fourneaux classiques, il est aujourd'hui également souhaité de réduire les fuites de vent chaud pour des raisons de meilleure sécurité.

### Objet de l'invention

Un but de la présente invention telle qu'elle a été décrite dans la revendication 1 est donc de résoudre le problème de l'étanchéité insuffisante pouvant exister entre busillon et tuyère d'un four à cuve. L'invention a aussi pour objet de fournir un nouveau système de liaison étanche entre le busillon et la tuyère, adapté à l'encombrement limité dans la zone entourant la jonction entre busillon et tuyère, et ne générant pas de contraintes supplémentaires lors de la mise en place du porte-vent ni de modifications des moyens de supports et de fixation du porte-vent.

Avec ces objectifs en vue, l'invention a pour objet un système de liaison étanche entre une tuyère de four à cuve, tel qu'un haut-fourneau sidérurgique, et un busillon d'amenée de vent, dans lequel un nez du busillon est pressé vers une extrémité arrière de la tuyère, en étant centré sur celle-ci tout en conservant une liberté de mouvement en pivotement par rapport à celle-ci. Selon l'invention, ce système comporte un siège de busillon annulaire rapporté, placé entre le nez du busillon et la tuyère et fixe en position par rapport à ladite tuyère, le nez de busillon étant en appui contre une face arrière du siège et un joint fixe étant placé entre le siège et la tuyère de manière que le siège soit en appui étanche contre une face arrière de la tuyère, et un manchon d'étanchéité déformable, disposé autour de la zone de contact entre le nez de busillon et le siège, est relié de manière étanche d'une part au siège et d'autre part au busillon.

### Description générale de l'invention

Afin de résoudre le problème mentionné ci-dessus, la présente invention propose d'assurer, d'une part, une étanchéité complémentaire entre le busillon et son siège, susceptibles de pivoter l'un par rapport à l'autre, au moyen du manchon d'étanchéité déformable, et, d'autre part, une étanchéité entre le siège de busillon et la tuyère, cette étanchéité pouvant être réalisée plus facilement du fait que le siège de busillon est fixe par rapport à la tuyère.

Préférentiellement, une rainure annulaire est formée sur la face avant du siège et un joint d'étanchéité est placé dans ladite rainure, de manière à être pressé contre la face arrière de la tuyère lorsque le busillon est lui même poussé en appui contre son siège par les moyens connus de l'art antérieur reliant le porte-vent à la paroi extérieure métallique du four. Selon une autre disposition particulière, le siège est logé et centré dans un logement réalisé à la partie arrière de la tuyère, et la face avant du siège est en appui contre une face arrière plane de la tuyère, constituée par la paroi de fond dudit logement.

Le siège de busillon est préférentiellement réalisé en acier. La face arrière du siège en contact avec le busillon peut présenter une surface conique, ou une surface concave épousant sensiblement la forme de la surface convexe du nez du busillon. De la sorte, le centrage du busillon par rapport à son siège, et donc par rapport à la tuyère, est assuré, et l'appui du busillon sur son siège participe aussi à l'étanchéité, de manière similaire au contact direct entre busillon et tuyère de l'art antérieur, mais cette étanchéité étant alors, conformément à la présente invention, renforcée par le manchon d'étanchéité.

Le manchon d'étanchéité est préférentiellement un compensateur à soufflet dont une extrémité est fixée de manière étanche, par exemple par soudure, sur le siège de busillon. L'autre extrémité du compensateur est fixée de manière étanche, également par soudure, directement sur la paroi métallique extérieure du busillon, ou sur un flasque rapporté sur cette paroi métallique. Même si un écartement venait à se produire entre le nez de busillon et le siège, l'étanchéité entre ceux-ci resterait conservée.

L'invention a aussi pour objet un haut-fourneau sidérurgique comportant une pluralité de tuyères et une pluralité de porte-vents comportant chacun un busillon associé à une tuyère par un système de liaison tel que défini précédemment. Le système selon l'invention est particulièrement destiné pour des hauts-fourneaux comportant un système d'amenée de gaz combustibles ou de gaz de recirculation ou gaz de gueulard aux tuyères. Il peut aussi être utilisé sur des fours à cuves de type classique.

### Brève description des dessins

D'autres particularités et caractéristiques de l'invention ressortiront de la description détaillée de deux modes de réalisation présentés ci-dessous, à titre d'illustration, et en se référant aux dessins annexés. Ceux-ci montrent:
Fig. 1: une vue d'ensemble en coupe d'un porte-vent, selon l'art antérieur, en position sur la paroi d'un haut-fourneau ;
Fig. 2: une vue de dessus partielle du porte-vent montrant en particulier le maintien du busillon en appui sur la tuyère, selon l'art antérieur, au moyen de tirants latéraux ;
Fig. 3: une vue en coupe de détail de la zone de contact entre busillon et tuyère selon l'art antérieur ;
Fig. 4: est une vue en coupe de la zone de liaison entre busillon et tuyère selon un premier mode de réalisation de l'invention ;
Fig. 5: est une vue en coupe de la zone de liaison entre busillon et tuyère selon un deuxième mode de réalisation de l'invention.

### Description d'une exécution préférée

Les figures 1 à 3, représentatives de l'état de la technique, ont déjà été commentées précédemment.

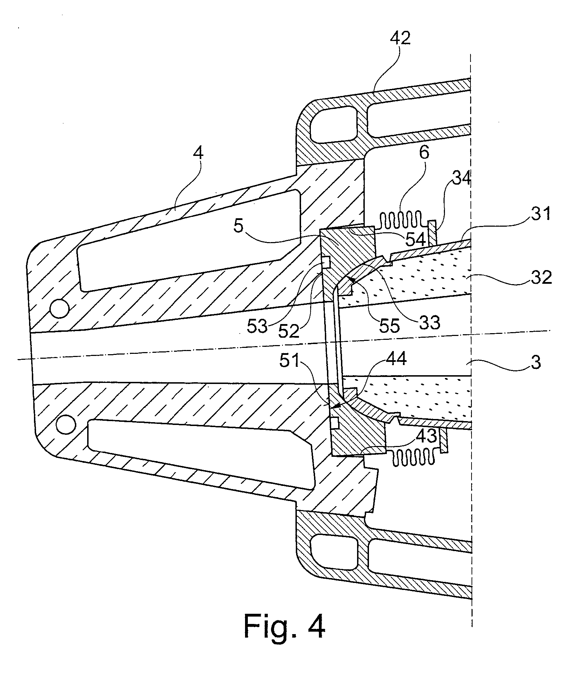

La figure 4 représente un premier mode de réalisation de l'invention qui se caractérise par la présence d'un siège de busillon 5 situé entre le nez 33 du busillon et la tuyère 4. Le siège de busillon est une pièce de forme annulaire en acier, située dans un logement cylindrique 43 réalisé à l'extrémité arrière de la tuyère 4, et centrée axialement avec la tuyère.

Une rainure circulaire 52 est réalisée dans la face avant 51 du siège, et reçoit un joint 53, destiné à assurer l'étanchéité entre le siège et la tuyère.

Le siège de busillon 5 comporte sur sa face arrière 54, du côté du busillon, une surface sphéroïdale concave 55, correspondant à la surface convexe du nez du busillon 33, de manière à autoriser un pivotement relatif entre busillon et siège, tout en conservant un contact le plus étanche possible entre ces éléments.

Un compensateur à soufflet 6 est monté de manière étanche entre la face arrière 54 du siège et un flasque 34 solidaire de la paroi métallique 31 du busillon et liée à celle-ci de manière également étanche, typiquement par soudure. Le compensateur à soufflet est réalisé en acier, préférentiellement en acier inoxydable. Typiquement aussi, le compensateur à soufflet est fixé par soudage de ses extrémités respectivement sur le siège et sur le flasque. On notera incidemment que, de ce fait, le busillon et son siège peuvent être préassemblés avant que l'ensemble soit mis en place définitive, par insertion du siège de busillon dans le logement 43 de la tuyère. Le siège de busillon porteur du joint d'étanchéité ainsi que du compensateur à soufflet peut être échangé le cas échéant comme une pièce d'usure.

Lorsque le busillon est pressé vers la tuyère, comme indiqué précédemment pour les systèmes selon l'art antérieur, la face avant 51 du siège de busillon vient en appui sur la face arrière plane 44 formant le fond du logement 43, et l'étanchéité entre ledit siège et la tuyère est assurée par le joint 53. Le joint d'étanchéité 53 ne doit pas être constituée nécessairement d'une matière résistant à des hautes températures puisque la tuyère est, de manière connue, refroidie à l'eau. Ce joint peut être par exemple un joint torique en silicone ou un joint spiralé inox-graphite.

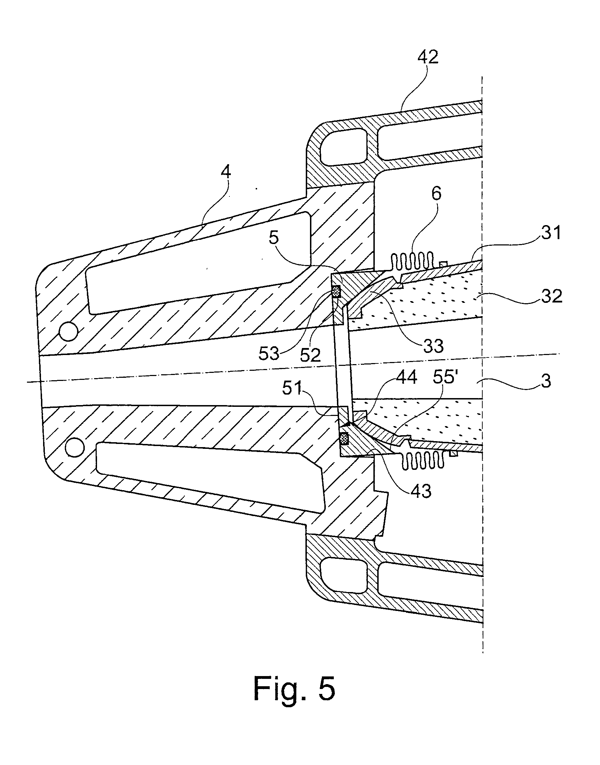

La figure 5 illustre une variante de réalisation du système. Dans cette variante, la surface 55' du siège de busillon sur laquelle s'appuie le nez de busillon 33, est une surface tronconique, et le compensateur à soufflet 6 est fixé par soudure directement sur la paroi métallique 31 du busillon.

## Revendications

1. Système de liaison étanche entre une tuyère (4) de four à cuve, tel qu'un haut-fourneau sidérurgique, et un busillon (3) d'amenée de vent, dans lequel un nez du busillon est pressé vers une extrémité arrière de la tuyère, en étant centré sur celle-ci tout en conservant une liberté de mouvement en pivotement par rapport à celle-ci,
**caractérisé en ce qu'**il comporte un siège (5) de busillon annulaire rapporté, placé entre le nez (33) du busillon et la tuyère (4) et fixe en position par rapport à ladite tuyère, la nez de busillon étant en appui contre une face arrière (55, 55') du siège et un joint fixe (53) étant placé entre le siège et la tuyère de manière que le siège soit en appui étanche contre une face arrière (44) de la tuyère, et un manchon (6) d'étanchéité déformable, disposé autour de la zone de contact entre le nez de busillon et le siège, le manchon (6) étant un compensateur à soufflet dont une extrémité est fixée de manière étanche au siège (5) de busillon, l'autre extrémité étant fixée de manière étanche à une paroi extérieure du busillon (3).

2. Système de liaison selon la revendication 1, dans lequel le siège (5) comporte une face avant (51) en appui contre une face arrière (44) plane de la tuyère.

3. Système de liaison selon la revendication 1 ou 2, dans lequel le siège (5) est situé et centré dans un logement (43) réalisé à la partie arrière de la tuyère (4).

4. Système de liaison selon l'une quelconque des revendications 1 à 3, dans lequel une rainure annulaire (52) est formée sur la face avant (51) du siège et le joint d'étanchéité (53) est placé dans ladite rainure.

5. Système de liaison selon l'une quelconque des revendications 1 à 4, dans lequel le siège (5) est en acier.

6. Système de liaison selon l'une quelconque des revendications 1 à 5, dans lequel la face arrière (54) du siège en contact avec le busillon présente une surface conique (55').

7. Système de liaison selon l'une quelconque des revendications 1 à 5, dans lequel la face arrière (54) du siège en contact avec le busillon présente une surface sphérique concave (55) épousant une surface sphérique convexe du nez du busillon.

8. Système de liaison selon l'une quelconque des revendications 1 à 7, dans lequel le manchon est fixé de manière étanche par soudure sur le siège (5) de busillon.

9. Système de liaison selon l'une quelconque des revendications 1 à 7, dans lequel le manchon est fixé de manière étanche par soudure sur une paroi métallique extérieure (31) du busillon.

10. Système de liaison selon l'une quelconque des revendications 1 à 7, dans lequel le manchon est fixé de manière étanche sur un flasque (34) rapporté sur une paroi métallique extérieure (31) du busillon.

11. Haut-fourneau sidérurgique comportant une pluralité de tuyères (4) et une pluralité de porte-vents (10) correspondants comportant chacun un busillon (3) associé à une tuyère (4) par un système de liaison selon l'une quelconque des revendications précédentes.

12. Haut-fourneau sidérurgique selon la revendication 11, comportant un système d'amenée de gaz combustibles ou de gaz de recirculation aux tuyères.

## Patentansprüche

1. System zur dichten Verbindung zwischen einer Blasform (4) eines Schachtofens, wie z. B. eines Hochofens der Stahlindustrie, und einer Heißwindeinlassdüse (3), bei dem ein Düsenmundstück zu einem hinteren Ende der Blasform gepresst wird und weiterhin schwenkbar dazu zentrisch darauf angeordnet ist,
**dadurch gekennzeichnet, dass** es einen eingesetzten ringförmigen Düsensitz (5) aufweist, der zwischen dem Düsenmundstück (33) und der Blasform (4) angeordnet und in Bezug auf die Blasform ortsfest ausgebildet ist, wobei das Düsenmundstück an einer Rückseite (55, 55') des Düsensitzes anliegt und zwischen dem Düsensitz und der Blasform eine feste Dichtung (53) so angeordnet ist, dass der Düsensitz dicht an einer Rückseite (44) der Blasform anliegt, und eine verformbare Dichtmuffe (6) aufweist, die um die Kontaktzone zwischen Düsenmundstück und Düsensitz herum angeordnet ist, wobei es sich bei der Dichtmuffe (6) um einen Faltenbalgkompensator handelt, dessen eines Ende dicht am Düsensitz (5), das andere Ende dicht an einer äußeren Wand der Düse (3) befestigt ist.

2. Verbindungssystem nach Anspruch 1, bei dem der Düsensitz (5) eine an einer ebenen Rückseite (44) der Blasform anliegende Vorderseite (51) aufweist.

3. Verbindungssystem nach Anspruch 1 oder 2, bei dem der Düsensitz (5) zentriert in einer am hinteren Teil der Blasform (4) ausgebildeten Aufnahme (43) angeordnet ist.

4. Verbindungssystem nach irgendeinem der Ansprüche 1 bis 3, bei dem an der Vorderseite (51) des Düsensitzes eine Ringnut (52) ausgebildet ist und die Dichtung (53) darin angeordnet ist.

5. Verbindungssystem nach irgendeinem der Ansprüche 1 bis 4, bei dem der Düsensitz (5) aus Stahl ist.

6. Verbindungssystem nach irgendeinem der Ansprüche 1 bis 5, bei dem die mit der Düse in Kontakt stehende Rückseite (54) des Düsensitzes eine konische Fläche (55') aufweist.

7. Verbindungssystem nach irgendeinem der Ansprüche 1 bis 5, bei dem die mit der Düse in Kontakt stehende Rückseite (54) des Düsensitzes eine kugelförmig-konkave Fläche (55) aufweist, die sich an eine kugelförmigkonvexe Fläche des Düsenmundstücks anschmiegt.

8. Verbindungssystem nach irgendeinem der Ansprüche 1 bis 7, bei dem die Muffe dicht an den Düsensitz (5) angeschweißt ist.

9. Verbindungssystem nach irgendeinem der Ansprüche 1 bis 7, bei dem die Muffe dicht an eine äußere Metallwand (31) der Düse angeschweißt ist.

10. Verbindungssystem nach irgendeinem der Ansprüche 1 bis 7, bei dem die Muffe dicht an einem an einer äußeren Metallwand (31) der Düse angebrachten Flansch (34) befestigt ist.

11. Hochofen mit einer Vielzahl von Blasformen (4) und einer Vielzahl von korrespondierenden Düsenstöcken (10), die jeweils eine Düse (3) aufweisen, die über ein Verbindungssystem nach irgendeinem der vorstehenden Ansprüche mit einer Blasform (4) verbunden ist.

12. Hochofen nach Anspruch 11 mit einem System zur Zuführung von Brenngasen oder Rückführungsgasen zu den Blasformen.

## Claims

1. A sealed connection system between a tuyere (4) of a shaft furnace, such as a steelmaking blast furnace, and an air blast pipe (3), in which a tip of the blast pipe is pressed towards a rear end of the tuyere, being centred thereon while still retaining freedom of pivoting movement relative thereto, **characterised in that** it comprises an added annular blast pipe seat (5), placed between the tip (33) of the blast pipe and tuyere (4) and immobile relative to said tuyere, the blast pipe tip resting against a rear face (55, 55') of the seat and an immobile gasket (53) being placed between the seat and the tuyere such that the seat rests in sealed manner against a rear face (44) of the tuyere, and a deformable sealing sleeve (6) arranged around the contact zone between the blast pipe tip and the seat, the sleeve (6) being a bellows compensator, one end of which is connected in sealed manner to the blast pipe seat (5), the other end being connected in sealed manner to an external wall of the blast pipe (3).

2. A connection system according to claim 1, wherein the seat (5) comprises a front face (51) resting against a planar rear face (44) of the tuyere.

3. A connection system according to claim 1 or claim 2, wherein the seat (5) is located and centred in a receptacle (43) provided on the rear part of the tuyere (4).

4. A connection system according to any one of claims 1 to 3, wherein an annular groove (52) is formed on the front face (51) of the seat and the sealing gasket (53) is placed in said groove.

5. A connection system according to any one of claims 1 to 4, wherein the seat (5) is made of steel.

6. A connection system according to any one of claims 1 to 5, wherein the rear face (54) of the seat in contact with the blast pipe has a conical surface (55').

7. A connection system according to any one of claims 1 to 5, wherein the rear face (54) of the seat in contact with the blast pipe has a concave spherical surface (55) which matches a spherical convex surface of the tip of the blast pipe.

8. A connection system according to any one of claims 1 to 7, wherein the sleeve is attached in sealed manner by welding to the seat (5) of the blast pipe.

9. A connection system according to any one of claims 1 to 7, wherein the sleeve is attached in sealed manner by welding to an external metal wall (31) of the blast pipe.

10. A connection system according to any one of claims 1 to 7, wherein the sleeve is attached in sealed manner by welding to a flange (34) added to an external metal wall (31) of the blast pipe.

11. A steelmaking blast furnace comprising a plurality of tuyeres (4) and a plurality of corresponding tuyere stocks (10) each comprising a blast pipe (3) associated with a tuyere (4) by a connection system according to any one of the preceding claims.

12. A steelmaking blast furnace according to claim 11, comprising a system for supplying fuel gases or recirculated gases to the tuyeres.
